# EUROPÄISCHE PATENTANMELDUNG

(11) **EP 2 397 448 A1**
(43) Veröffentlichungstag der Anmeldung: **21.12.2011**
(21) Anmeldenummer: 11169914.6
(22) Anmeldetag: 15.06.2011
(51) Int. Cl.: C03C 12/00, C08K 3/36, C08K 3/40

(54) **Zubereitung, Herstellung und Anwendung von feinteiligem Pulvermaterial auf Glasbasis**

(30) Priorität: 17.06.2010 DE 102010024132
(71) Anmelder: bene_fit Systems GmbH & Co. KG, 92242 Hirschau (DE)
(72) Erfinder: Kräuter, Reinhard, 92237 Sulzbach-Rosenberg (DE)
(74) Vertreter: Hannke, Christian

(57) **Zusammenfassung**

Feinteiliges Pulvermaterial auf Glasbasis zur Erhöhung der Kratzfestigkeit auf Oberflächen, wobei das Pulvermaterial in organische oder anorganische Trägermaterialien einbettbar ist und eine Korngröße von weniger als 100 µm aufweist, wobei das Pulvermaterial mindestens 20 - 100 Ma-% SiO₂ bezogen auf die Gesamtmasse des Pulvermaterials aufweist und das Pulvermaterial in wässriger Umgebung hydrolysestabil ist.

## Beschreibung

Die vorliegende Erfindung betrifft ein feinteiliges Pulvermaterial auf Glasbasis zur Erhöhung der Kratzfestigkeit von Oberflächen, wobei das Pulvermaterial in organische oder anorganische Trägermaterialien einbettbar ist und eine Korngröße von weniger als 100 µm aufweist, wobei das Pulvermaterial mindestens 20 - 100 Ma-% SiO₂ bezogen auf die Gesamtmasse des Pulvermaterials aufweist und das Pulvermaterial in wässriger Umgebung hydrolysestabil ist.

Glas ist ein amorpher, formstabiler, nicht kristalliner anorganischer Feststoff, welcher seit langem in verschiedensten Zusammensetzungen hergestellt wird. Hauptsächliche Verwendung findet Glas in der Architektur, als Einrichtungsgegenstand, in der Technik, als Gestaltungsrohstoff, wie beispielsweise als Schmuck. Darüber hinaus greift insbesondere die Lebensmittelindustrie auf Gebrauchsglas als inerte Verpackungsbehälter vielfach zurück. Neben der Behälterglasindustrie wird Gebrauchsglas auch als Flachglas hergestellt, beispielsweise für Spiegel oder Fensterscheiben. Unter Gebrauchsglas ist hierbei einfaches Natron-Kalk-Glas zu verstehen, welches neben Siliziumdioxid (SiO₂) auch hohe Anteile an Kalziumoxid (CaO) bzw. Natriumoxid (Na₂O) aufweist. Neben diesem Gebrauchsglas gibt es darüber hinaus Spezialgläser, wie beispielsweise Kali-Kalk-Gläser, Borosilikatglas, Quarzglas, Bor-Tonerde-Gläser oder auch Kali-Blei-Glas, welche sich beispielsweise durch ihre chemische oder physikalische Beständigkeit auszeichnen.

Im Gegensatz zu der oben beschriebenen Verwendung von Gebrauchsglas als einzelne, aus der Schmelze hergestellte Formkörper, wird die Herstellung von anorganischen Pulverprodukten auf Glasbasis nur vereinzelt beschrieben. In der Industrie finden daher bislang lediglich anorganische Pulverprodukte, wie beispielsweise Kaolin, Glimmer, Titandioxid oder Tonminerale einen Einsatzbereich als Füllstoffe in Papier, Polymeren oder Farben.

In US 2010/0048790 A1 wird die Herstellung von Glaspulvern und die Anwendung dieser Glaspulver als Anti-Blocking-Pigmente in Polymeren offenbart. Dabei wird speziell Natron-Kalk-Glas eingesetzt und dieses mittels nassen oder trockenen Verfahrens verkleinert. Das resultierende pulvrige Produkt wird beispielsweise als Füllstoff in Polymeren verwendet, insbesondere als Anti-Blocking-Zusatz für Polymerfolien.

In Praxisversuchen erweist sich die im Patent beschriebene pulvrige Kalk-Natron-Glasbasis als schwierig und nachteilig, da das resultierende Pulver nur eine unzureichende pH-Stabilität aufweist. Die Herstellung feinteiliger Natron-Kalk-Glasprodukte, wie beispielsweise Glaspulver, erweist sich insbesondere durch nassmechanische Herstellungsverfahren als hoch komplex und nachteilig, da diese Verfahren in wässriger Umgebung stattfinden. Die bei diesen Verfahren gebildeten feinteiligen wässrigen Suspensionen, bestehend aus Glaspulver und Wasser, weisen eine hydrolytische Instabilität auf. Die wässrige Umgebung tritt mit dem feinteiligen Natron-Kalk-Glaspulver derart in Wechselwirkung, dass die oberste Glasgrenzschicht der pulverbildenden Partikel anquillt und eine Hydrolyse der in dieser Grenzfläche enthaltenen Glasverbindungen stattfindet.

Hierdurch wird eine deutliche Zunahme des pH-Wertes bedingt, da je nach Glaszusammensetzung Alkali- bzw. Erdalkalimetalle, bevorzugt als ihre Kationen, aus dem Glaspulver austreten und somit unter Laugenbildung, wie beispielsweise Natronlauge (NaOH), zur Erhöhung des pH-Wertes der wässrigen Umgebung beitragen. Durch diese Abgabe der Metallkationen wird eine weitergehende Auflösung der Glaspartikel bzw. deren Inhaltsstoffe bestimmt.

Dies wirkt sich nach kürzester Zeit, also bereits bei Herstellung der entsprechenden feinteiligen Suspensionen, extrem nachteilig beispielsweise auf die Viskosität und damit auch auf den Feststoffgehalt der entsprechenden Suspensionen aus. Durch das Aufquellen der obersten Glasgrenzschicht wird der wässrigen Umgebung Wasser entzogen, sodass die Viskosität der Suspension deutlich ansteigt. Somit werden Verdünnungen bedingt, durch welche der Feststoffgehalt der Suspensionen deutlich reduziert wird.

Zudem ist denkbar, dass sich die chemische Zusammensetzung des Glaspulvers, beispielsweise durch die besagte Herauslösung der einzelnen Glasbestandteile, verändert, wodurch sich das gesamte Eigenschaftsprofil des Glaspulvers ebenfalls dynamisch verändert.

Werden entsprechende feinteilige Produkte auf Natron-Kalk-Glasbasis als Füllstoffe in Polymeren eingesetzt, beispielsweise in Folien, so bedingt der Kontakt mit Wasser eine hydrolytische Umsetzung der Natron-Kalk-Glaspulver, wodurch eine zumindest teilweise Zerstörung bzw. eine vollständige Zerstörung des Füllstoffes bedingt wird. So ist beispielsweise denkbar, dass durch die Auflösung des Glasnetzwerks dessen Stabilität beeinträchtigt wird und somit die Eigenschaft als Füllstoff verloren geht. Zudem kann eine starke Beeinträchtigung der Stabilität des umgebenden Polymers bedingt werden, da durch das durch die Hydrolyse bedingte Anquellen des Glaspulvers Spannungen entstehen können, welche sich auf das das Glaspulver umgebende Polymer ausweiten und zu Rissen in der Polymermatrix führen können.

Daher ist es Aufgabe der vorliegenden Erfindung, ein feinteiliges Pulvermaterial und/oder eine Suspension auf Glasbasis bereitzustellen, welches/ welche mit einem nassmechanischen Herstellungsverfahren herstellbar ist, ohne dass während der Herstellung bzw. bei der späteren Anwendung zusätzlich Wasser zugeführt werden muss.

Weiterhin ist es Aufgabe der vorliegenden Erfindung, zusätzliche andere Applikationen für einteilige Pulverzusammensetzungen auf Glasbasis in anderen Anwendungen verfügbar zu machen.

Aufgabe der vorliegenden Erfindung ist es weiterhin, die technischen und/oder ökonomischen und/oder ökologischen Bedingungen bei der Herstellung des feinteiligen Pulvermaterials und dessen Anwendung zu verbessern.

Des Weiteren ist es Aufgabe der Erfindung, ein feinteiliges Pulvermaterial sowie ein Verfahren zu dessen Herstellung bereitzustellen, wobei das Pulvermaterial in organische oder anorganische Trägermaterialien einbettbar ist und eine Korngröße von kleiner als 100 µm aufweist. Das Verfahren und das feinteilige Pulvermaterial auf Glasbasis sollte eine gegenüber dem Stand der Technik verbesserte homogene Beschichtung von zu beschichtendem Materials ermöglichen.

Weiterhin ist es Aufgabe der vorliegenden Erfindung, ein feinteiliges Pulvermaterial auf Glasbasis bereitzustellen, welches im eingebetteten Zustand in ein Trägermaterial die damit zu beschichtende Oberfläche gegen Zerkratzung, Auswaschung oder Ausbleichung schützt.

Erfindungsgemäß wird diese Aufgabe durch ein feinteiliges Pulvermaterial auf Glasbasis nach Anspruch 1, durch ein Verfahren nach Anspruch 10 und durch die Verwendung dieses feinteiligen Pulvermaterials nach Anspruch 11 gelöst.

Ein wesentlicher Aspekt der Erfindung ist ein feinteiliges Pulvermaterial auf Glasbasis zur Erhöhung der Kratzfestigkeit auf Oberflächen, wobei das Pulvermaterial in organische oder anorganische Trägermaterialien einsetzbar ist und eine Korngröße von weniger als 1000 µm aufweist, wobei das Pulvermaterial mindestens 20 - 100 Ma-% SiO₂ bezogen auf die Gesamtmasse des Pulvermaterials aufweist und das Pulvermaterial in wässriger Umgebung hydrolysestabil ist.

Für die Herstellung des feinteiligen Pulvermaterials auf Glasbasis werden geeignete Rohstoffe bevorzugt nach den folgenden Kriterien ausgewählt:
- bevorzugt sehr hohe Transparenz des zu erzeugenden Pulvermaterials (glasklar), optional auch trüb
- bevorzugt farblose, optional auf farbige, Rohstoffe
- zu erzeugendes Pulvermaterial ist bevorzugt frei von Einschlüssen und Poren, optional auch mit Einschlüssen und Poren
- Rohstoffe und zu erzeugendes Pulvermaterial weisen hohe Stabilität gegenüber Wasser, bevorzugt eine hydrolytische Klasse < 4 gemäß ISO 719/DIN 12111, besonders bevorzugt eine hydrolytische Klasse < 3 nach ISO 719/DIN 12111

Das feinteilige erfindungsgemäße Pulvermaterial auf Glasbasis zeichnet sich dadurch aus, dass das Pulvermaterial mindestens 20 - 100 Ma-% SiO₂ bezogen auf die Gesamtmasse des Pulvermaterials aufweist. Weist das feinteilige Pulvermaterial einen hohen Siliziumdioxidgehalt auf, so sind gleichzeitig nur geringe Mengen von Trennstellenbildnern wie Alkali- bzw. Erdalkalimetallkationen, vorhanden, welche in wässriger Umgebung aus dem feinteiligen Pulvermaterial ausgewaschen werden können und so zur Netzwerkauflösung beitragen.

Wird das erfindungsgemäße feinteilige Pulvermaterial mittels Nassmahlung hergestellt, so sind trotz der extrem hohen Pulverfeinheit und der damit einhergehenden hohen spezifischen Oberfläche kein Aufquellen der Glasgrenzschicht und auch keine Viskositätszunahme zu beobachten. Es findet somit keine Hydrolyse statt. Das feinteilige Pulvermaterial ist hydrolysestabil. Dies ist vorteilhaft, da somit sowohl Herstellung als auch spätere Verarbeitung des Pulvermaterials deutlich vereinfacht werden und das Pulvermaterial sowohl in trockenen als auch in nassen Umgebungen einsetzbar ist, ohne dass seine Materialeigenschaften verändert werden. Dies ist besonders bei der Verwendung des Pulvermaterials als Füllstoff wichtig, da Wasserkontakte, welche bereits durch die Luftfeuchtigkeit stattfinden, nie ganz ausgeschlossen werden können. Somit kann durch das erfindungsgemäße hydrolysestabile Pulvermaterial eine vielseitige Verwendbarkeit ohne Qualitätsreduzierung bedingt durch Hydrolysereaktionen ermöglicht werden.

Ferner sind auch Gläser mit Borgehalt, wie beispielsweise Borosilikatglas, oder generell Gläser mit einem niedrigen Gehalt an Alkalimetallen oder einem hohem Gehalt an Siliziumdioxid, wie beispielsweise Quarzglas, als Ausgangsstoffe für das erfindungsgemäße Pulvermaterial auf Glasbasis geeignet. Es hat sich gezeigt, dass bei der Nassmahlung sehr hohe Feststoffgehalte mit derartigen Glasausgangsstoffen erreicht werden konnten.

Zudem sind durch die beschriebene Vorgehensweise verbesserte technische und/oder ökonomische und/oder ökologische Bedingungen für die Herstellung geschaffen, welche es wiederum ermöglichen, neue Applikationen in anderen Anwendungsbereichen zu erschließen.

Vorteilhaft weisen die Glasausgangsstoffe für die Herstellung des erfindungsgemäßen Pulvermaterials eine hydrolytische Beständigkeit auf, welche nach der ISO 719/DIN 12111 kleiner als die hydrolytische Klasse 4, bevorzugt kleiner Klasse 3, einzustufen ist.

In einer weiteren vorteilhaften Ausführungsform weist das Pulvermaterial mindestens 40 - 100 Ma-% SiO₂ und bevorzugt mindestens 60 -100 Ma-% SiO₂ bezogen auf die Gesamtmasse des Pulvers auf. Dies ist vorteilhaft, da mit der Zunahme des Siliziumdioxidgehaltes im Pulver weniger Alkali- bzw. Erdalkalimetalle in der Ausgangsglaszusammensetzung enthalten sind. Durch die Reduzierung des Erdalkalimetalle bzw. Alkalimetallanteils wird die hydrolytische Beständigkeit des Pulvermaterials in wässriger Umgebung erhöht, da wenige Erdalkali- bzw. Alkalimetallkationen aus dem Glas in die wässrige Umgebung abgegeben werden können, sodass eine Zersetzung des Glasnetzwerks bei Herstellung bzw. bei späterer Verwendung des feinteiligen Pulvermaterials verhindert wird.

Bei einer weiteren vorteilhaften Zusammensetzung des Pulvermaterials weist mindestens 1 Ma-% des Pulvermaterials, bevorzugt mindestens 2 Ma-% des Pulvermaterials eine Korngröße im Bereich von 1 nm bis 2 µm und besonders bevorzugt 5 Ma-% des Pulvers eine Korngröße von < 2 µm auf. Dies ist vorteilhaft, da durch die geringe Korngröße des Pulvermaterials eine homogene Verteilung in der wässrigen Suspension bei Herstellung bzw. im organischen bzw. anorganischen Trägermaterial bedingt wird. Größere Korngrößen bedingen aufgrund ihres Gewichtes ein schnelleres Absinken der das feinteilige Pulvermaterial bildenden Partikel in Suspension bzw. im Trägermaterial, sodass beispielsweise eine Gradientenbildung bedingt wird. Dies führt im Trägermaterial beispielsweise zu einer reduzierten Kratzfestigkeit, da das Pulver nicht homogen im Trägermaterial, sondern vorwiegend im unteren Bereich nahe der zu beschichtenden Oberfläche angeordnet ist. Ungleichmäßige Beschichtungen der zu beschichtenden Oberfläche sind die Folge.

Darüber hinaus weist das erfindungsgemäße Pulvermaterial eine niedrige spezifische Oberfläche BET von < 100 m²/g und bevorzugt von < 75 m²/g auf.

In einer weiteren vorteilhaften Zusammensetzung sind dem Pulvermaterial zusätzliche Additive hinzugefügt. Vorteilhaft sind derartige Additive als Dispergiermittel, Rheologieadditive, Verdicker, anorganische Pigmente, organische Pigmente oder als Füllstoffe ausgebildet oder zur Oberflächenmodifizierung des Pulvermaterials geeignet. Es ist beispielsweise denkbar, dass zum Zeitpunkt der Herstellung des feinteiligen Pulvermaterials Additive zugegeben werden, welche beispielsweise die Oberfläche der Glaspulverpartikel vorteilhaft modifizieren, beispielsweise durch Silanisierung, Beschichtung oder Hydrophobierung.

Die eingesetzten Pigmente weisen vorteilhaft eine Korngröße von kleiner 50 µm, bevorzugt kleiner 25 µm auf und können beispielsweise plättchen-, faser- oder kugelförmig gelöst, als Paste, als Suspension oder pulvrig zugeführt werden.

Optional weist das feinteilige Pulvermaterial färbende Elemente wie V, Ce, Fe, Co, Cu, Ni, Cr, ZrO₂ und/oder F in beliebiger Kombination in einem Bereich von 0,0001 bis 40 Ma-%, bevorzugt 0,001 bis 30 Ma-% und weiter bevorzugt von 0,01 bis 20 Ma-% bezogen auf Gesamtmasse des Pulvermaterials auf, wobei auch nur eine der genannten Komponenten eingesetzt werden kann. , wobei derartige Elemente vorteilhaft in ihrer Oxidform oder als kolloidale Lösungen vorliegen und eingesetzt werden.

Optional enthält das erfindungsgemäße Pulvermaterial zusätzlich Al, Zn, Ca, B, Ba, Mg, Ti, Na, K, P, O und/oder H in beliebiger Kombination in einem Bereich von 0,00001 bis 80 Ma-%, bevorzugt 0,0001 bis 50 Ma-% bezogen auf die Gesamtmasse des Pulvermaterials, wobei auch nur eine der genannten Komponenten eingesetzt werden kann.. Dies kannvorteilhaft sein, da durch die zusätzlich genannten Elemente, welche bevorzugt als Kationen bzw. Anionen vorliegen, die Eigenschaften des feinteiligen Pulvermaterials kontrolliert werden können.

Wird das erfindungsgemäße Pulvermaterial auf Glasbasis in einem organischen oder anorganischen Trägermaterial eingebettet, welches auf einer zu beschichtenden Oberfläche aufgebracht und ausgehärtet ist, so liefert ein Test zur Beständigkeit gegen Vielfachzerkratzung nach der Norm IHD-W-445 mittels eines Martindalegeräts lediglich einen Glanzverlust der beschichteten Oberfläche von < 50 %, bevorzugt < 35 %. Dieser geringe Glanzverlust zeigt, dass die mit dem das Pulvermaterial enthaltenden Trägermaterial beschichtete Oberfläche eine geringe Zerkratzung aufweist und somit vor Verschleiß besser geschützt ist als ohne einer derartigen Beschichtung.

Vorteilhaft sind als zu beschichtende Oberflächen Fußbodenbeläge, wie beispielsweise Laminat oder Parkett denkbar, oder aber auch strapazierfähige Büromöbel oder Regalböden. Darüber hinaus sind jegliche natürliche oder synthetische Materialien denkbar, wie beispielsweise Steine, Keramik, Kunststoffe oder Glas.

Als Trägematerial können organische oder anorganische Verbindungen bzw. Mischungen hieraus eingesetzt werden. Vorteilhaft weist das Trägermaterial bei Auftragung auf die zu beschichtenden Oberfläche einen vorbestimmbaren Gehalt an Pulvermaterial auf. Diese Mischung ist bei Auftragung auf die zu beschichtenden Oberfläche vorteilhaft flüssig bis viskos und härtet nach Auftragung beispielsweise reaktiv chemisch oder physikalisch aus. Die Aushärtung kann darüber hinaus beispielsweise durch Temperaturzufuhr oder Bestrahlung mittels UV-Licht beschleunigt werden. Ferner ist denkbar, dass eine Aushärtung mittels Lösemittelentzug ermöglicht wird. Beispielhafte Verbindungen sind Polymere, wie Polyester, Polyurethane, Melaminharze, Epoxidharze, Acrylharze, Acrylatharze oder deren Mischungen sowie auch Silicone, Phosphate oder Silikate oder Mischungen hieraus.

Die vorliegende Erfindung betrifft zudem ein Verfahren zur Herstellung von feinteiligen Pulvermaterial auf Glasbasis zur Erhöhung der Kratzfestigkeit von Oberflächen mittels Trocken-und/oder Nassmahlung, wobei das Pulvermaterial in organisches oder anorganisches Trägermaterial einbettbar ist und eine Korngröße von < 100 µm aufweist, wobei die Rohstoffe vorsortiert, gebrochen, gesiebt, gemahlen und klassiert werden und das Pulver trocken oder als Suspension dem Trägermaterial zugeführt und mit diesem bevorzugt homogen vermischt wird und im Anschluss auf eine zu beschichtende Oberfläche aufgebracht und verfestigt wird. Vorteilhaft erfolgt das beschriebene Klassieren beispielsweise mittels Windsichtung.

Bevorzugt erfolgt die Herstellung des feinteiligen Glasmaterials durch Auswahl geeigneter Rohstoffmaterialien nach den oben beschriebenen Kriterien und ggf. deren Aufbereitung, beispielsweise durch Vorsortierung, Brechen, Sieben, Mahlen, Klassieren als eine mögliche Prozessfolge im Rahmen einer Trockenaufbereitung. Ggf. kann eine Dispergierung eines trocken aufbereiteten Pulvermaterials auf Glasbasis als ein weiterer Verfahrensschritt hinzukommen, wobei beispielsweise Dispergiermittel, Rheologieadditive, Additive oder andere organische oder anorganische Bestandteile, wie beispielsweise weitere Pulvermaterialien, zugeführt werden.

Des Weiteren kann ein weiteres beispielhaftes Verfahren zur Herstellung des feinteiligen Pulvermaterials auf Glasbasis angewendet werden, wobei mittels Vorsortierung, Brechen, Sieben, ggf. Vormahlen, Klassieren, Nassmahlen, ggf. Fraktionieren, beispielsweise mittels Hydrozyklon oder anderen geeigneten Verfahren, die Rohstoffe zerkleinert werden. Bei diesem Verfahren wird Trockenaufbereitung und Nassaufbereitung kombiniert. Die Herstellung kann durch einen Dispergierschritt ergänzt werden, bei welchem Additive wie z. B. Dispergiermittel, Rheologieadditive und optional andere organische oder anorganische Bestandteile wie beispielsweise weitere Pulver, zugeführt werden.

In einem denkbaren Folgeschritt kann die so hergestellte Suspension eines feinteiligen Pulvermaterials auf Glasbasis auch in ein trockenes Pulver überführt werden. Dies kann beispielsweise mittels Sprühtrocknung, Mahltrockung, Rotormühlen oder anderen geeigneten Verfahren erfolgen.

Die oben beschriebenen Verfahrensschritte können zeitlich und räumlich unabhängig voneinander durchgeführt werden. Es können alle möglichen einzelnen Verfahrensschritte zeitlich oder räumlich in beliebiger Kombination getrennt oder miteinander durchgeführt werden bzw. im Bedarfsfall weggelassen werden. Ferner ist auch denkbar, dass neue Verfahrensschritte eingeführt werden. Eine mögliche Prozessfolge zu den beschriebenen beispielhaften Verfahren kann durch Trockenmahlung, Nassmahlung oder eine Kombination hieraus erfolgen.

Das erfindungsgemäß erzeugte feinteilige Glasmaterial zeichnet sich beispielsweise durch folgende Eigenschaften aus:
- mittels Sedimentationsverfahren, beispielsweise Sedigraph, oder Laserbeugung, beispielsweise Cilas, weisen 100 Ma-% der Pulverpartikel eine Korngröße von < 100 µm, bevorzugt weisen 100 Ma-% des Pulvers eine Korngröße von < 50 µm auf
- bevorzugt weisen mindestens 90 Ma-% der Pulverpartikel eine Korngröße von < 5 µm auf, gemessen nach den oben beschriebenen Methoden
- weiter bevorzugt weisen mindestens 1 Ma-%, bevorzugt mindestens 5 Ma-%, eine Korngröße von < 2 µm auf, gemessen nach den oben beschriebenen Methoden
- besonders bevorzugt weisen 2 Ma-% des Pulvermaterials eine Korngröße von 1 nm bis 2 µm, gemessen nach den oben beschriebenen Methoden, auf
- wird das erfindungsgemäße Pulvermaterial als wässrige Suspension vorgelegt, weist diese bevorzugt einen Feststoffgehalt von > 30 Ma-%, besonders bevorzugt einen Feststoffgehalt von > 40 Ma-% und besonders besonders bevorzugt einen Feststoffgehalt von > 45 Ma-% bezogen auf die Gesamtmasse der Suspension auf
- Suspension oder Pulver beispielsweise können zudem Additive enthalten, wie beispielsweise Dispergiermittel, Rheologieadditive, Verdicker oder andere organische oder anorganische Pigmente oder Füllstoffe

Ein weiterer wesentlicher Aspekt der vorliegenden Erfindung ist die Verwendung des nach einem der oben beschriebenen Zusammensetzungen oder Verfahrensvarianten des Pulvermaterials in Farben und Lacken, in der Bauindustrie, in der Holzwerkstoffindustrie, in Polymerensystem (Elastomer, Duroplast, Thermoplast, Harz), in Systemen zur Fußbodenbeschichtung, zur Papierbeschichtung, in Systemen zur Möbelbeschichtung, zur Beschichtung von Glas, Keramik oder Verbundmaterialien oder als Füllstoff.

Wie oben beschrieben, eignet sich das erfindungsgemäße Pulvermaterial insbesondere für Verwendungen in einem organischen Trägermaterial, beispielsweise eines Melaminharzes oder auch eines anorganischen Trägermaterials, wie beispielsweise hydraulische/zementöse Systeme, zur Beschichtung von beispielsweise Fußbodenpanelen, bevorzugt im Innenbereich, wobei vorteilhaft das mit dem erfindungsgemäßen Pulvermaterial versetzte Trägermaterial transparent ausgebildet ist und somit nicht die Farben der zu beschichtenden Oberfläche überdeckt bzw. beeinflusst.

Ferner wäre auch denkbar, dass neben Fußbodenpanelen, Laminat oder Parkett, auch weitere Einrichtungsgegenstände in Büro oder Haushalt mit dem das erfindungsgemäße Pulvermaterial enthaltende Trägermaterial beschichtet werden, um die Kratzfestigkeit der Oberflächen zu erhöhen und somit Beschädigungen vorzubeugen. Vorteilhaft ist hierbei zu berücksichtigen, dass das eingesetzte erfindungsgemäße feinteilige Pulvermaterial auf Glasbasis umweltverträglich ist und bevorzugt keine gesundheitsschädlichen Schwermetallverbin**dungen aufweist.**

### Beispiele

- Glas 1: : Quarzglas, Versuch /1, Versuch 12, Versuch /3
- Glas 2: : Borosilikatglas
- Glas 3: : Natron-Kalk-Glas

Das Aufgabeglas wurde mit geeigneten Verfahren auf eine Korngröße von 100 Ma-% <1 mm gebracht und danach in wässriger Suspension mit einem Feststoffgehalt von 60 Ma-% mittels kontinuierlicher Schwingmühle und Al₂O₃-Mahlzylindern im Kreislauf behandelt. Bei Glas 3 war hierbei eine kontinuierliche Zunahme der Viskosität während der Mahlung zu beobachten, so dass der Wassergehalt der Suspension mehrmals erhöht werden musste, um eine gleichmäßige Mahlung zu ermöglichen.

### Ergebnisse

**Tabelle 1: Ergebnisse zur Korngrößenverteilung mittels Laserbeugung in Suspension (Methode 1)**

| Cilas | Glas 1/1 | Glas 1/2 | Glas 1/3 | Glas 2 | Glas 3 |
|---|---|---|---|---|---|
| | Ma-% | Ma-% | Ma-% | Ma-% | Ma-% |
| Feststoffgehalt | 60 | 60 | 60 | 60 | 39,2 |
| <6 µm | 100,0 | 100,0 | 100 | 100,0 | 100 |
| <4 µm | 100,0 | 100,0 | 100 | 100,0 | 99,4 |
| <3 µm | 99,8 | 100,0 | 99,5 | 99,7 | 93,9 |
| <2 µm | 79,8 | 74,5 | 87,4 | 75,0 | 57,3 |
| <1,5 µm | 41,8 | 37,6 | 49,4 | 38,7 | 19,4 |
| <1 µm | 26,9 | 22,9 | 34,2 | 24,1 | 7,7 |
| d50 (Gew.) | 1,6µm | 1,7µm | 1,5µm | 1,7µm | 1,9 µm |

**Tabelle 2: Ergebnisse zur Korngrößenverteilung, Sedimentationsmethode, Sedigraph in Suspension (Methode 2)**

| Sedigraph | Glas 1/1 | Glas 1/2 | Glas 1/3 | Glas 2 | Glas 3 |
|---|---|---|---|---|---|
| | Ma-% | Ma-% | Ma-% | Ma-% | Ma-% |
| Feststoffgehalt | 60 | 60 | 60 | 60 | 39,2 |
| >20 µm | 1,4 | | | | |
| 10 µm - 20 µm | 5,9 | | 0,0 | | 0,5 |
| 6 µm - 10 µm | 4,2 | 0,3 | 0,0 | | 0,1 |
| 4 µm-6 µm | 2,8 | 0,4 | 0,2 | | 0,3 |
| 2 µm - 4 µm | 7,2 | 3,2 | 1,8 | 0,4 | 10,3 |
| 1 µm - 2 µm | 24,2 | 8,0 | 17,6 | 8,1 | 42,7 |
| 0,5 µm - 1 µm | 23,5 | | | | 28,6 |
| <0,5 µm | 30,8 | | | | 17,6 |
| 0 µm - 1 µm | | 87,1 | 80,4 | | |
| 0 µm - 2 µm | 78,5 | 95,1 | 98 | 98,2 | 88,8 |
| Abrasion, mg | 29,5 | | | | |
| pH-Wert | 6-7 | 6-7 | 6-7 | 7-8 | 11,7 |
| Weißgrad* | 83,84 | | | | |

| | | | | | |
|---|---|---|---|---|---|
| *) R 457 | | | | | |

In Tabelle 1 sind die Ergebnisse zur Ermittlung der Korngrößenverteilung mittels Laserbeugung in Suspension (Methode 1) dargestellt. In Tabelle 2 sind die Ergebnisse zur Ermittlung der Korngrößenverteilung mittels Sedimentationsmethode (Sedigraph) in Suspension (Methode 2) aufgelistet. Aus beiden Tabellen geht hervor, dass die Feinheit, der Feststoffgehalt der Suspension und die rheologischen Eigenschaften von Glas 1 und Glas 2 ähnlich sind.

Glas 3 verhält sich im Gegensatz dazu rheologisch deutlich unterschiedlich. Das Material verdickt bereits während des Mahlens sehr stark. Um das Mahlen überhaupt fortsetzen zu können, musste mehrmals verdünnt werden, um so die Viskosität der Suspension zu reduzieren, wodurch jedoch eine deutliche Abnahme des Feststoffgehaltes bedingt wurde.

Das Verdicken der Suspension mit Glas 3, also die Viskositätszunahme dieser Suspension, wird auf Hydrolysereaktionen an der Glasoberfläche zurückgeführt, wodurch eine damit verbundene starke Zunahme des pH-Wertes und die damit einhergehende Korrosion feiner und feinster Glaspartikel bedingt wird. Der pH-Wert von Glas 3 (gemahlen) ist mit einem Messwert von pH > 11 auch deutlich alkalischer als der pH-Wert der anderen Proben (siehe Tabelle 2).

Nach einer Suspensionsstandzeit von 3 Tagen (nach der Mahlung) hat die Viskosität der Suspension aus Glas 3 extrem zugenommen, wodurch das Material fest geworden war. Die Suspensionen aus Glas 1 und 2 zeigten auch nach 6 Monaten keinerlei Veränderung in ihrer Viskosität und wiesen, wie zu Beginn der Herstellung, eine wasserähnliche Konsistenz auf.

Die Suspensionen aus Glas 1 und Glas 2 lassen sich mit bekannten Verfahren pulverisieren, beispielsweise sprühtrocknen. Die entsprechenden Produkte können dazu in Wasser oder anderen Medien wie z.B. organischen Flüssigkeiten dispergiert bzw. redispergiert bzw. durch vorhergehende Nassmahlung vereinzelt werden. Vorteilhafte Hilfsmittel können entweder bereits vor der Sprühtrocknung oder vor der Redispergierung bzw. Vereinzelung zugesetzt werden.

### Anwendungen

Als Pulver oder als Suspension kann Glas 1 und/oder Glas 2 einzeln und/oder mit anderen Pulvern, Pigmenten, Additiven, Polymeren, Füllstoffen oder jeglichen anderen Materialien einzeln oder in Mischung verwendet werden, beispielsweise in den Anwendungsbereichen Papier, Polymere, Farben und Lacke, Bau, Holzwerkstoffindustrie, Möbelfertigung, Glas, Keramik, Verbundwerkstoffe.

Dabei können technische und/oder ökonomische und/oder ökologische Vorteile erzielt werden. Beispielsweise können die Herstellungs- und Verarbeitungseigenschaften, chemische Eigenschaften, physikalische Eigenschaften, Reduzierung der Kosten, Verbesserung der Kratzfestigkeit, mechanische Eigenschaften, Farbe, Haptik, Optik, Transparenz verbessert werden.

### Beispiele zur Anwendung

Erfindungsgemäße Materialien können beispielsweise als Zusatz zu Melaminharz zur Verbesserung der Kratzfestigkeit damit beschichteter Holzwerkstoffe eingesetzt werden.

In Versuchen mit Natron-Kalk-Glas (Glas 3) als Zusatz zu Melaminharz und einer Beschichtung von Holzwerkstoffen mit diesem Melaminharz konnte gezeigt werden, dass sich dabei kein homogener, geschlossener Film auf der Holzwerkstoffoberfläche bildet oder dieser optisch extrem unregelmäßig erscheint. Dies wird auf das Material und seine hydrolytische Instabilität zurückgeführt. Entsprechend beschichtete Holzwerkstoffprodukte sind in dieser Form unter anderem aufgrund der unregelmäßigen Beschichtung nicht verwendbar.

Dagegen zeigt die Verwendung der Gläser 1 und 2 eine sehr gute Verarbeitbarkeit in Melaminharz. Ebenso lässt sich ein Holzwerkstoff damit sehr gut beschichten. Es bildet sich eine homogene, geschlossene sowie optisch gleichmäßige transparente Oberfläche. Darüber hinaus haben sich deutliche Vorteile in der Mikrokratzfestigkeit (Vielfachzerkratzung, Mar Resistance) ergeben, wie nachfolgend beschrieben. Damit sind diese Materialien besonders gut für beispielsweise einen Zusatz in Beschichtungen für z.B. Laminate oder zur Möbelbeschichtung geeignet. Vorteilhaft weist die aus Trägermaterial und Pulvermaterial bestehende Beschichtung eine Schichtdicke von weniger als 1 mm, bevorzugt weniger als 0,5 mm auf.

### Beschreibung der Muster

Zur Herstellung der Muster wurde Glas 1/3 und Glas 2 in Konzentrationen von jeweils 2 Ma-% bzw. 5 Ma-% bezogen auf die Glassuspension und bezogen auf flüssige Harzmasse zugesetzt. Zum Vergleich wurde parallel ein Muster ohne jeglichen Glaszusatz hergestellt (Blindwert, Probe Nr. 5).

Den verschiedenen nummerierten Proben entsprechen dabei folgenden Gläsern und Konzentrationen:
Nr. 1: Glas 1/3, 2 Ma-%,
Nr. 2: Glas 1/3, 5 Ma-%,
Nr. 3: Glas 2, 2 Ma-%,
Nr. 4: Glas 2, 5 Ma-%,
Nr. 5: Blindwert ohne Glaszusatz.

### Prüfung der Muster

Die Beständigkeit gegen Vielfachzerkratzung (Mar Resistance) wurde gemäß der im Institut für Holztechnologie Dresden (IHD) erstellten Norm "Holzfußboden - Bestimmung der Beständigkeit gegen Vielfachzerkratzung" (IHD-W-445) mit einem Mini-Martindale-Gerät ermittelt. Dieses Scheuerprüfgerät umfasst ein Grundgestell an welchem ein Scheuertisch und ein Antrieb angeordnet sind. Der Antrieb umfasst zwei äußere und ein mittleres Getriebe, wobei das Verhältnis der Getriebedrehzahlen der äußeren Getriebe zum mittleren Getriebe 16:15 beträgt. Jeder der Prüfkörper (PK) wurde mit 5 Lissajous-Bewegungen nach dem Verfahren A und mit 10 Lissajous-Bewegungen nach dem Verfahren B beansprucht. Eine Lissajous-Bewegung entspricht dabei 16 Zyklen, d.h. 16 Umdrehungen der beiden äußeren Getriebe des Martindale-Gerätes und 15 Umdrehungen des inneren Getriebes. Die Lissajous-Figur entsteht durch die Überlagerung zweier Sinusschwingungen. Die über die Lissajous-Bewegungen definierten Reibtellerbewegungen bilden eine solche Lissajous-Figur.

Als Prüfkörper ist hierbei die zu untersuchende Oberfläche zu verstehen, welche mit dem Trägermaterial, hier beispielhaft dem Melaminharz, in welchem das erfindungsgemäße Pulvermaterial eingebettet ist, beschichtet ist.

Die einzelnen Prüfkörper wurden zwei verschiedenen Prüfverfahren unterzogen. Bei Verfahren A wird der Prüfkörper mit einer Prüfkraft von 6 N beaufschlagt und als Reibmittel ein Scotch-Brite-Reibmaterial 7447 (sehr fein) verwendet. Die Auswertung erfolgt bei Verfahren A wie bereits oben erwähnt nach 5 Lissajous-Bewegungen und erfolgt mittels einer Bestimmung der Glanzänderung.

Bei einer Prüfung nach Verfahren B wird der Prüfkörper mit 4 N beaufschlagt uns als Reibmittel ein Scotch-Brite-Reibmaterial 7440 (mittelfein) verwendet. Es wurden im Verfahren B 10 Lissajous-Bewegungen durchgeführt. Die Auswertung erfolgt über eine Klassifizierung des Kratzbildes.

### Ergebnisse

**Tabelle 3: Ermittlung des Glanzverlustes nach Verfahren A**

| Proben Nr. | Ermittlung Reflektometerwert bei einer Messgeometrie von 60° | | |
|---|---|---|---|
| | Im Ausgangszustand | Nach 5 LB | Glanzverlust in % |
| 1 | 12,2 | 10,2 | 16,4 |
| 2 | 12,9 | 9,0 | 30,2 |
| 3 | 12,1 | 8,7 | 28,1 |
| 4 | 12,0 | 9,1 | 24,2 |
| 5 | 12,8 | 6,1 | 52,3 |

**Tabelle 4: Ermittlung des Kratzbildes nach Verfahren B**

| Proben Nr. | Einstufung des Kratzbildes gemäß IHD-W-445 in Kratzstufen nach 10 Lissajous-Bewegungen |
|---|---|
| 1 | 2 |
| 2 | 1 |
| 3 | 3 |
| 4 | 1 |
| 5 | 4 |

| | |
|---|---|
| Dabei sind den einzelnen Bewertungen (Kratzstufen) folgende Kodierungen zugeordnet: Code 1 = geringe Kratzer, eben erkennbar Code 2 = viele Kratzer, Lissajous-Figur partiell erkennbar Code 3 = sehr viele Kratzer, Kratzdichte unbestimmt, Lissajous-Figur partiell erkennbar Code 4 = Vermischung von Lissajous-Figur und sehr vielen Kratzern | |

### Auswertung

Die geprüften Oberflächemuster Nr. 1, 2, 3 und 4 weisen bezüglich Mikroverkratzung keine signifikanten Unterschiede auf, wie in Tabellen 3 und 4 gezeigt. Dies gilt insbesondere für den ermittelten Glanzverlust, wie in Tabelle 3 dargestellt, aber auch für die Ergebnisse der einzelnen Kratzbilder, wie in Tabelle 4 aufgezeigt. Im Vergleich mit herkömmlichen Laminatfußböden erreichen diese Varianten hinsichtlich ihres Widerstandes gegenüber Mikroverkratzung gute Ergebnisse.

Im Gegensatz dazu ist der Glanzverlust des Prüfkörpers Nr. 5 mit Beschichtung ohne Glaszusatz mit 52,5 % deutlich höher. Ebenso weist dieser Prüfkörper nach Behandlung nach Verfahren B eine deutliche Verkratzung der Oberfläche auf (Kratzbild Code 4).

Weitere Vorteile, Ziele und Eigenschaften vorliegender Erfindung werden anhand nachfolgender Beschreibung anliegender Zeichnung erläutert, in welcher beispielhaft einige Ausführungsformen der vorliegenden Erfindung dargestellt sind. Dabei zeigt
Fig. 1 die Muster 1 bis 5 vor Durchführung der Reibversuche,
Fig. 2 das Muster 1 vor Durchführung der Reibversuche,
Fig. 3 das Muster 2 vor Durchführung der Reibversuche,
Fig. 4 das Muster 3 vor Durchführung der Reibversuche,
Fig. 5 das Muster 4 vor Durchführung der Reibversuche,
Fig. 6 das Muster 5 vor Durchführung der Reibversuche,
Fig. 7 das Muster 1 nach der Durchführung der Reibversuche nach Verfahren A (links) und Verfahren B (rechts),

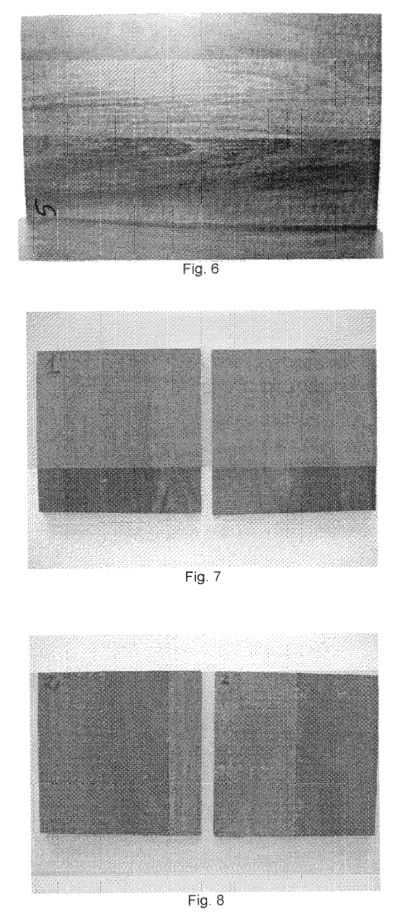

Fig. 7 das Muster 1 nach der Durchführung der Reibversuche nach Verfahren A (links) und Verfahren B (rechts),
Fig. 8 das Muster 2 nach der Durchführung der Reibversuche nach Verfahren A (links) und Verfahren B (rechts),

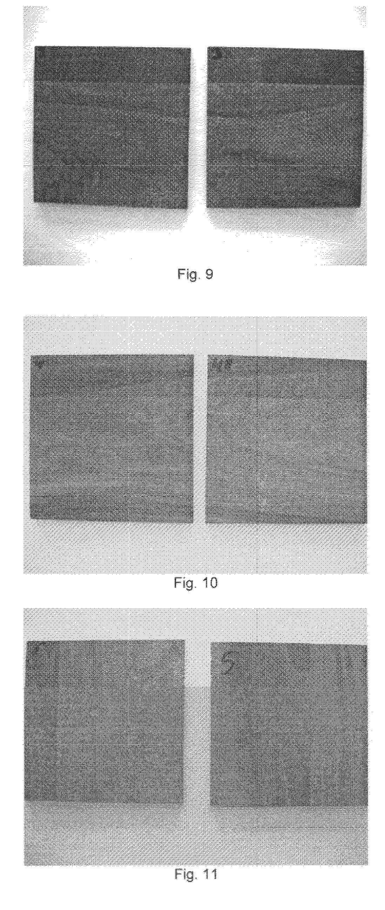

Fig. 9 das Muster 3 nach der Durchführung der Reibversuche nach Verfahren A (links) und Verfahren B (rechts),
Fig. 10 das Muster 4 nach der Durchführung der Reibversuche nach Verfahren A (links) und Verfahren B (rechts) und
Fig. 11 das Muster 5 nach der Durchführung der Reibversuche nach Verfahren A (links) und Verfahren B (rechts).

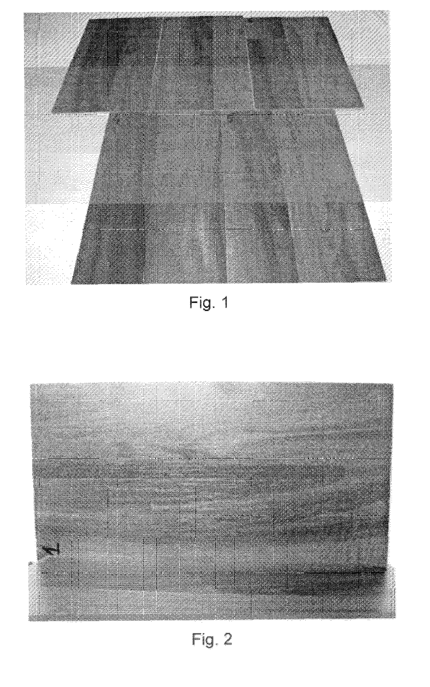

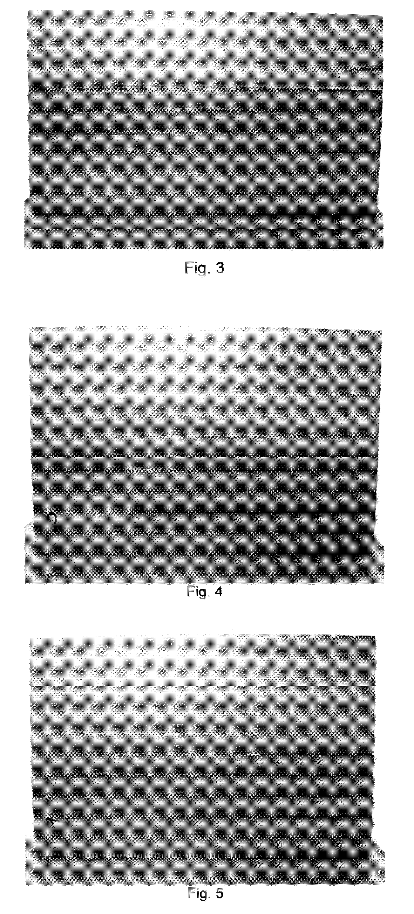

Zu erkennen ist in den Figuren 1 bis 6 jeweils die homogene Beschichtung des Holzwerkstoffes. Es ist die Maserung zu erkennen, jedoch keine Unregelmäßigkeiten der Beschichtung. In Fig. 1 sind die Muster 1 bis 5 gemeinsam dargestellt, wobei in der oberen Reihe von links nach rechts die Muster 1, 2, und 3 dargestellt sind, und in der unteren Reihe von links nach rechts die Muster 4 und 5.

In den Figuren 7 bis 11 sind die Prüfkörper 1 bis 5 jeweils nach der Behandlung nach Verfahren A (links) und Verfahren B (rechts) dargestellt. Die bei starker Belastung zu erwartenden Beschädigungen der Oberfläche in Form von Spuren der Lissajous-Bewegung sind in den Figuren 7 bis 10 nicht oder lediglich schwach zu erkennen. In Figur 11 dagegen ist die Lissajous-Figur und sehr viele Kratzer zu erkennen.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Feinteiliges Pulvermaterial auf Glasbasis zur Erhöhung der Kratzfestigkeit auf Oberflächen, wobei das Pulvermaterial in organische oder anorganische Trägermaterialien einbettbar ist und eine Korngröße von weniger als 100 µm aufweist
**dadurch gekennzeichnet, dass**
das Pulvermaterial mindestens 20 - 100 Ma-% SiO₂ bezogen auf die Gesamtmasse des Pulvermaterials aufweist und das Pulvermaterial in wässriger Umgebung hydrolysestabil ist.

2. Pulvermaterial nach Anspruch 1,
**dadurch gekennzeichnet, dass**
mindestens 40 - 100 Ma-% SiO₂ und bevorzugt mindestens 60 - 100 Ma-% SiO₂ bezogen auf die Gesamtmasse des Pulvers enthalten sind.

3. Pulvermaterial nach Anspruch 1 und 2,
**dadurch gekennzeichnet, dass**
mindestens 1 Ma-% des Pulvermaterials, bevorzugt mindestens 2 Ma-% des Pulvermaterials eine Korngröße im Bereich von 1 nm bis 2 µm und besonders bevorzugt 5 Ma-% des Pulvers eine Korngröße von kleiner 2 µm aufweisen.

4. Pulvermaterial nach einem der vorangehenden Ansprüche,
**dadurch gekennzeichnet, dass**
es eine niedrige spezifische Oberfläche BET von kleiner 100 m²/g und bevorzugt von kleiner 75 m²/g aufweist.

5. Pulvermaterial nach einem der vorangehenden Ansprüche,
**dadurch gekennzeichnet, dass**
es zusätzliche Additive aufweist.

6. Pulver nach Anspruch 5,
**dadurch gekennzeichnet, dass**
die Additive als Dispergiermittel, Rheologieadditive, Verdicker, anorganische Pigmente, organische Pigmente oder als Füllstoffe ausgebildet sind oder zur Oberflächenmodifizierung des Pulvermaterials geeignet sind.

7. Pulvermaterial nach einem der vorhergehenden Ansprüche,
**dadurch gekennzeichnet, dass**
bevorzugt färbende Elemente wie V, Ce, Fe, Co, Cu, Ni, Cr, ZrO₂ und/oder F in einem Bereich von 0,0001 bis 40 Ma-%, bevorzugt 0,001 bis 30 Ma-% und weiter bevorzugt von 0,01 bis 20 Ma-% bezogen auf die Gesamtmasse des Pulvermaterials enthalten sind.

8. Pulvermaterial nach einem der vorhergehenden Ansprüche,
**dadurch gekennzeichnet, dass**
bevorzugt zusätzlich Al, Zn, Ca, B, Ba, Mg, Ti, Na, K, P, O und/oder H in einem Bereich von 0,00001 bis 80 Ma-%, bevorzugt 0,0001 bis 50 Ma-% bezogen auf die Gesamtmasse des Pulvermaterials enthalten sind

9. Pulvermaterial nach einem der vorangehenden Ansprüche,
**dadurch gekennzeichnet, dass**
eine mittels eines Martindalegeräts vielfachzerkratzte Oberfläche (Norm IHD-W-445), einen Glanzverlust von kleiner 50 %, bevorzugt kleiner 35 %, aufweist, wobei die Oberfläche mit einem Trägermaterial beschichtet ist, in welchem das Pulvermaterial eingebettet ist.

10. Verfahren zur Herstellung von feinteiligem Pulvermaterial auf Glasbasis zur Erhöhung der Kratzfestigkeit von Oberflächen mittels Trocken - und/oder Nassmahlung, wobei das Pulvermaterial in organisches oder anorganischer Trägermaterial einbettbar ist und eine Korngröße von kleiner 100 µm aufweist,
**dadurch gekennzeichnet, dass**
- Rohstoffe vorsortiert, gebrochen, gesiebt, gemahlen und klassiert werden,
- das Pulver trocken oder als Suspension dem Trägermaterial zugeführt und mit diesem bevorzugt homogen vermischt wird und auf eine zu beschichtende Oberfläche aufgebracht wird.

11. Anwendung des nach einem der vorgehenden Ansprüche hergestellten Pulvermaterials in Farben und Lacken, in der Bauindustrie, in der Holzwerkstoffindustrie, in polymeren Systemen (Elastomer, Duroplast, Thermoplast, Harz), in Systemen zur Fußbodenbeschichtung, zur Papierbeschichtung, in Systemen zur Möbelbeschichtung, zur Beschichtung von Glas, Keramik oder Verbundmaterialien, als Füllstoff.
